# EUROPÄISCHE PATENTSCHRIFT

(11) **EP 4 265 459 B1**
(45) Veröffentlichungstag und Bekanntmachung des Hinweises auf die Patenterteilung: **01.05.2024**
(21) Anmeldenummer: 23168181.8
(22) Anmeldetag: 17.04.2023
(51) Int. Cl.: B60K 17/04

(54) **ELEKTRISCHE ANTRIEBSACHSE**
ELECTRIC DRIVE AXLE
ESSIEU MOTEUR ÉLECTRIQUE

(30) Priorität: 19.04.2022 AT 502532022
(43) Veröffentlichungstag der Anmeldung: 25.10.2023
(73) Patentinhaber: AVL List GmbH, 8020 Graz (AT)
(72) Erfinder: BACH, Georg, Leitring (AT)
(74) Vertreter: Babeluk, Michael

(56) Entgegenhaltungen:
- EP-A1- 3 951 211
- WO-A1-2018/059783
- CN-A- 109 017 251
- CN-A- 112 406 497
- JP-A- 2019 206 204
- US-A1- 2020 238 807

## Beschreibung

Die Erfindung betrifft eine elektrische Antriebsachse für ein zweispuriges Kraftfahrzeug, mit einer ersten Halbwelle zum Antrieb eines ersten Rades und einer zweiten Halbwelle zum Antrieb eines zweiten Rades des Kraftfahrzeuges, wobei die erste Halbwelle über ein erstes Abtriebsrad durch eine erste elektrische Maschine und die zweite Halbwelle über ein zweites Abtriebsrad durch eine zweite elektrische Maschine antreibbar ist, wobei zumindest eine elektrische Maschine über ein Schaltelement mit einem Rad antriebsverbindbar ist, wobei das Schaltelement zumindest eine in einem ersten Antriebspfad zwischen dem ersten Abtriebsrad und der ersten Halbwelle koaxial zur ersten Halbwelle angeordnete und axial verschiebbare erste Schiebemuffe aufweist, welche ausgebildet ist, um in einer ersten Schaltstellung des Schaltelementes die erste Halbwelle vom ersten Abtriebsrad zu trennen und in einer zweiten Schaltstellung und/oder dritten Schaltstellung des Schaltelementes eine drehfeste Verbindung zwischen der ersten Halbwelle und dem ersten Abtriebsrad herzustellen, und wobei das Schaltelement zumindest eine in einem zweiten Antriebspfad zwischen dem zweiten Abtriebsrad und der zweiten Halbwelle koaxial zur zweiten Halbwelle angeordnete und axial verschiebbare zweite Schiebemuffe aufweist, welche ausgebildet ist, um in der ersten Schaltstellung des Schaltelementes die zweite Halbwelle vom zweiten Abtriebsrad zu trennen und in der zweiten Schaltstellung und/oder einer dritten Schaltstellung des Schaltelementes eine drehfeste Verbindung zwischen der zweiten Halbwelle und dem zweiten Abtriebsrad herzustellen.

Bekannt sind Anordnungen mit ein oder zwei Antriebsmaschinen. Anordnungen mit nur einer Antriebsmaschine verfügen über mechanisches Differentialgetriebe, um die Drehzahlunterschiede an den Rädern in Kurvenfahrt auszugleichen. Sofern kein mechanisches Torque-Vectoring-System vorgesehen ist, wird das Antriebsmoment immer 50:50 auf beide Räder aufgeteilt. Anordnungen mit zwei Antriebsmaschinen sind so ausgeführt, dass jeweils eine Maschine ein Rad antreibt. Der Vorteil dabei ist, dass hierbei kein Differentialgetriebe notwendig ist. Außerdem erlaubt es diese Anordnung, Torque-Vectoring rein durch regelungstechnische Maßnahmen darzustellen, was Fahrkomfort und -sicherheit wesentlich erhöht.

Elektrische Antriebsachsen werden mitunter als zusätzliche Antriebe genutzt. Wird eine Antriebsachse in gewissen Fahrsituationen nicht benötigt, kann es sinnvoll sein, den Antrieb mechanisch von den Rädern abzukoppeln, um ein dauerndes Mitschleppen zu verhindern, und somit den Antriebswirkungsgrad zu erhöhen.

Die WO 2018/059783 A1 beschreibt eine Antriebsvorrichtung für eine Fahrzeugachse eines zweispurigen Fahrzeuges mit elektrischem Antrieb, wobei jedem Fahrzeugrad dieser Fahrzeugachse eine elektrische Maschine zugeordnet ist. Die elektrischen Wellen der elektrischen Maschinen sind jeweils über erste und zweite Schaltelemente trieblich mit einer ersten und zweiten Flanschwelle der Fahrzeugräder verbindbar. Die Fahrzeugachse weist ein Achsdifferential auf, das ausgangsseitig auf die Flanschwellen der Fahrzeugräder abtreibt und eingangsseitig über ein drittes und viertes Schaltelement mit den Elektromaschinen-Wellen verbindbar ist. Diese Lösung benötigt insgesamt vier Schaltelemente, davon zwei Lamellenkupplungen, und wird auf Ebene der elektrischen Maschinen geschaltet. Dies wirkt sich nachteilig auf den Wirkungsgrad aus.

Weiters ist aus der CN 109 017 251 A eine elektrische Antriebsachse mit einem Differential bekannt, welches über ein Stirnradgetriebe und zwei Schaltelementen mit zwei elektrischen Maschinen antriebsverbindbar ist, wobei die Schaltelemente im Antriebspfad zwischen den Antriebswellen der elektrischen Maschinen und dem Stirnradgetriebe angeordnet sind. Eine ähnliche elektrische Antriebsachse ist aus der CN 108 819 690 A. Die Tatsache, dass das Getriebe und das Differential nicht entkoppelt werden können, wirkt sich nachteilig auf den Antriebswirkungsgrad aus.

Die JP 2018-001845 A offenbart eine elektrische Antriebsachse für ein zweispuriges Fahrzeug mit zwei Halbwellen zum Antrieb der Räder, wobei der ersten Halbwelle eine erste elektrische Maschine und der zweiten Halbwelle eine zweite elektrische Maschine zugeordnet ist. Die elektrischen Maschinen sind über Kupplungsmechanismen und Abtriebsräder mit den Halbwellen verbindbar, wobei zwischen jeder Halbwelle und dem korrespondierenden Abtriebsrad ein Schaltelement angeordnet ist. Die JP 2019-206204 A zeigt eine ähnliche Anordnung.

Die CN 112406497 A offenbart eine elektrische Antriebsachse mit zwei elektrischen Maschinen, wobei jede elektrische Antriebsachse über eine Kupplung und eine Stirnradstufe auf ein Rad des Fahrzeuges antreibend einwirkt. Die elektrischen Maschinen können auch miteinander über eine Kupplung gekoppelt werden.

Aufgabe der Erfindung ist eine elektrische Antriebsachse mit hohem Antriebswirkungsgrad bereitzustellen.

Diese Aufgabe wird erfindungsgemäß dadurch gelöst, dass die erste Schiebemuffe und die zweite Schiebemuffe über ein Verbindungselement fest miteinander verbunden sind.

In einer Ausführungsvariante der Erfindung ist vorgesehen, dass das Schaltelement zumindest eine in einem dritten Antriebspfad zwischen dem ersten Abtriebsrad und dem zweiten Abtriebsrad koaxial zur ersten und zweiten Halbwelle angeordnete und axial verschiebbare dritte Schiebemuffe aufweist, welche ausgebildet ist, um in der ersten und/oder zweiten Schaltstellung des Schaltelementes das erste Abtriebsrad und das zweite Abtriebsrad antriebsmäßig zu entkoppeln und in einer dritten Schaltstellung des Schaltelementes das erste und das zweite Abtriebsrad antriebsmäßig miteinander zu koppeln. In der dritten Schaltstellung kann somit eine vollständige Achssperre erzielt werden.

Um ein gleichzeitiges Schalten der ersten Schiebemuffe und der zweiten Schiebemuffe zu ermöglichen, ist es vorteilhaft, wenn das Verbindungselement durch die dritte Schiebemuffe gebildet ist.

Bevorzugt ist das erste Abtriebsrad und/oder das zweite Abtriebsrad durch ein Zahnrad einer Getriebestufe gebildet.

Günstigerweise ist die erste elektrische Maschine permanent mit dem ersten Abtriebsrad und/oder die zweite elektrische Maschine permanent mit dem zweiten Abtriebsrad antriebsverbunden. Die erste elektrische Maschine wirkt dabei direkt oder indirekt permanent - also ohne dazwischenliegendem Schaltelement auf das erste Abtriebsrad und die zweite elektrische Maschine direkt oder indirekt permanent auf das zweite Abtriebsrad ein.

Vorzugsweise sind die Schiebemuffen relativ zu den beiden Halbwellen und den beiden Abtriebsrädern axial verschiebbar gelagert.

Eine Ausführungsvariante der Erfindung sieht vor, dass die erste Schiebemuffe in jeder der Schaltstellungen permanent drehfest mit der ersten Halbwelle und die zweite Schiebemuffe in jeder der Schaltstellungen permanent drehfest mit dem zweiten Abtriebsrad verbunden sind.

Vorzugsweise ist vorgesehen, dass in der ersten Schaltstellung die erste Schiebemuffe von dem ersten Abtriebsrad und die zweite Schiebemuffe von der zweiten Halbwelle getrennt sind.

In weiterer Ausführung der Erfindung ist vorgesehen, dass in der zweiten und/oder dritten Schaltstellung die erste Schiebemuffe sowohl mit der ersten Halbwelle als auch mit dem ersten Abtriebsrad antriebsverbunden ist und die zweite Schiebemuffe sowohl mit der zweiten Halbwelle, als auch mit dem zweiten Abtriebsrad antriebsverbunden ist.

Besonders vorteilhaft ist es, wenn in der dritten Schaltstellung das erste Abtriebsrad und das zweite Abtriebsrad, vorzugsweise durch die dritte Schiebemuffe, miteinander gekoppelt sind. Auf diese Weise lässt sich ein starrer Antrieb auf die Abtriebsräder realisieren, um beispielsweise auf rutschigem Untergrund die Traktion zu erhöhen.

In einer Ausführungsvariante der Erfindung ist vorgesehen, dass in der dritten Schaltstellung zumindest ein Abtriebsrad über eine Parksperre blockierbar ist, wobei die Parksperre zumindest ein vorzugsweise auf einer Antriebswelle einer elektrischen Maschine angeordnetes Sperrrad aufweist, in welches ein gehäusefest gelagertes Sperrglied formschlüssig einlenkbar ist.

Eine weitere Ausführungsvariante der Erfindung sieht vor, dass in einer vierten Schaltstellung die erste Schiebemuffe sowohl mit der ersten Halbwelle, als auch mit dem ersten Abtriebsrad antriebsverbunden ist und die zweite Schiebemuffe sowohl mit der zweiten Halbwelle, als auch mit dem zweiten Abtriebsrad antriebsverbunden ist, wobei das erste Abtriebsrad und das zweite Abtriebsrad, vorzugsweise durch die dritte Schiebemuffe, miteinander gekoppelt sind, und dass das erste Schaltelement und/oder das zweite Schaltelement drehfest mit einem Gehäuse verbunden sind. Dies ermöglicht auf einfache Weise eine Parksperre mit einer minimalen Anzahl an Teilen.

Die beschrieben Antriebsachse ermöglicht einen hohen Wirkungsrad und eine sehr kompakte Bauweise.

Die Erfindung wird im Folgend anhand des in den nicht einschränkenden Figuren gezeigten Ausführungsbeispiels näher erläutert. Darin zeigen schematisch:
- Fig. 1: eine erfindungsgemäße Antriebsachse in einer ersten Ausführungs-variante;
- Fig. 2: diese Antriebsachse in einer ersten Schaltstellung;
- Fig. 3: diese Antriebsachse in einer zweiten Schaltstellung;
- Fig. 4: diese Antriebsachse in einer dritten Schaltstellung;
- Fig. 5: eine erfindungsgemäße Antriebsachse in einer zweiten Ausführungs-variante;
- Fig. 6: diese Antriebsachse in einer ersten Schaltstellung;
- Fig. 7: diese Antriebsachse in einer zweiten Schaltstellung;
- Fig. 8: diese Antriebsachse in einer dritten Schaltstellung;
- Fig. 9: diese Antriebsachse in einer vierten Schaltstellung; und
- Fig. 10: eine erfindungsgemäße Antriebsachse in einer dritten Ausführungs-variante.

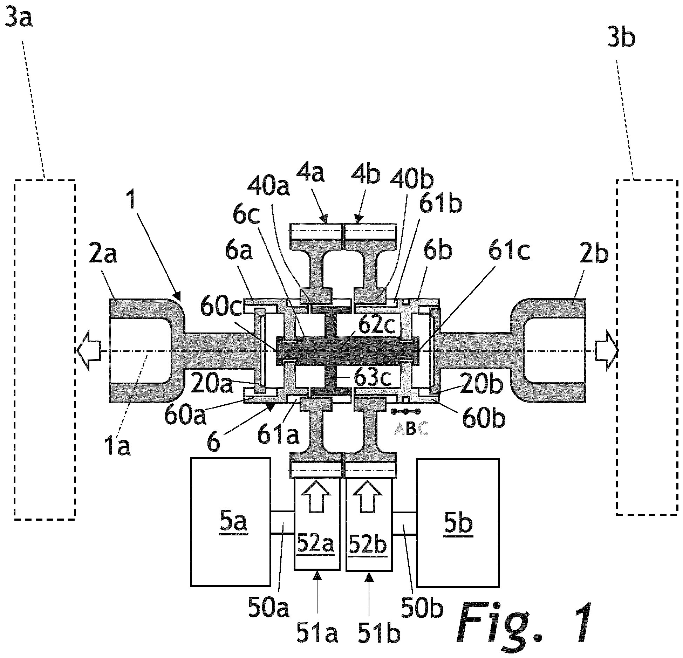

Fig. 1 zeigte eine elektrische Antriebsachse 10 für ein zweispuriges Kraftfahrzeug in einer ersten Ausführungsvariante der Erfindung, mit einer ersten Halbwelle 2a zum Antrieb eines ersten Rades 3a und einer zweiten Halbwelle 2b zum Antrieb eines zweiten Rades 3b des Kraftfahrzeuges. Die erste Halbwelle 2a ist über ein erstes Abtriebsrad 4a durch eine erste elektrische Maschine 5a und die zweite Halbwelle 2b über ein zweites Abtriebsrad 4b mit einer zweiten elektrischen Maschine 5b antreibbar. Die elektrische Antriebsachse 1 weist ein Schaltelement 6 auf um eine Antriebsverbindung zwischen den Antriebsrädern 4a, 4b und den Halbwellen 2a, 2b herzustellen.

Die elektrischen Maschinen 5a, 5b können direkt oder indirekt über jeweils eine Antriebswelle 50a, 50b, zumindest eine Getriebestufe 51a, 51b und ein Zahnrad 52a, 52b auf das Abtriebsrad 4a, 4b einwirken. In gezeigten Ausführungsbeispiel der Erfindung werden das erste Abtriebsrad 4a und das zweite Abtriebsrad 4b jeweils durch ein Zahnrad 52a, 52b einer Getriebestufe 51a, 51b gebildet.

Das Schaltelement 6 weist eine in einem ersten Antriebspfad zwischen dem ersten Abtriebsrad 4a und der ersten Halbwelle 2a koaxial zur ersten Halbwelle 2a angeordnete und axial verschiebbare erste Schiebemuffe 6a auf. Die erste Schiebemuffe 6a ist ausgebildet, um in einer ersten Schaltstellung des Schaltelementes 6 die erste Halbwelle 2a vom ersten Abtriebsrad 4a zu trennen und in einer zweiten Schaltstellung eine drehfeste Verbindung zwischen der ersten Halbwelle 2a und dem ersten Abtriebsrad 4a herzustellen.

Das Schaltelement 6 weist weiters eine in einem zweiten Antriebspfad zwischen dem zweiten Abtriebsrad 4b und der zweiten Halbwelle 2b koaxial zur zweiten Halbwelle 2b angeordnete und axial verschiebbare zweite Schiebemuffe 6b auf. Diese ist ausgebildet, um in der ersten Schaltstellung des Schaltelementes 6 die zweite Halbwelle 2b vom zweiten Abtriebsrad 4b zu trennen und in einer zweiten Schaltstellung eine drehfeste Verbindung zwischen der zweiten Halbwelle 2b und dem zweiten Abtriebsrad 4b herzustellen.

Die erste Schiebemuffe 6a und die zweite Schiebemuffe 6b sind dabei über ein Verbindungselement 7 fest miteinander verbunden.

Das Schaltelement 6 weist darüber hinaus eine in einem dritten Antriebspfad zwischen dem ersten Abtriebsrad 4a und dem zweiten Abtriebsrad 4b koaxial zur ersten Halbwelle 2a und zweiten Halbwelle 2b angeordnete und axial verschiebbare dritte Schiebemuffe 6c auf. Die dritte Schiebemuffe 6c ist ausgebildet, um in der ersten und/oder zweiten Schaltstellung des Schaltelementes 6 das erste Abtriebsrad 4a und das zweite Abtriebsrad 4b antriebsmäßig zu entkoppeln und in einer dritten Schaltstellung des Schaltelementes 6 das erste Abtriebsrad 4a und das zweite Abtriebsrad 4b antriebsmäßig miteinander zu verbinden. Die dritte Schiebemuffe 6c bildet das Verbindungselement 62c zur Verbindung der ersten Schiebemuffe 6a und der zweiten Schiebemuffe 6b.

Die zwei Abtriebsräder 4a und 4b sind als Zahnräder ausgeführt und jeweils über ein Getriebe (nicht dargestellt) mit den elektrischen Maschinen verbunden. Die zwei Halbwellen 2a und 2b treiben jeweils ein erstes, beispielsweise linkes Rad 3a bzw. zweites, beispielsweise rechtes Rad 3b des Fahrzeuges an. Die ersten 6a und zweiten Schiebemuffen 6b sind so ausgeführt, dass sie das erste Abtriebsrad 4a mit der ersten Halbwelle 2a bzw. das zweite Abtriebsrad 4b mit der zweiten Halbwelle 2b wahlweise drehfest verbinden oder entkoppeln. Die dritte Schiebemuffe 6c ist so ausgeführt, dass sie die beiden Abtriebsräder 4a und 4b wahlweise drehfest verbindet oder entkoppelt. Weiters sind die Schiebemuffen 6a, 6b und 6c so ausgeführt, dass sie sich zueinander verdrehen und nur gemeinsam axial verschieben lassen.

Das Schaltelement weist drei Schaltstellungen A, B, C auf, wobei die Schalstellungen durch unterschiedliche axiale Positionen der miteinander verbundenen Schiebermuffen 6a, 6b, 6c relativ zu den Halbwellen 2a, 2b und den Abtriebsrädern 4a, 4b charakterisiert sind. Die erste Schaltstellung A und die dritte Schaltstellung C bilden dabei Endstellungen des Schaltelementes 6 und die zweite Schaltstellung B eine zwischen der ersten A und der dritten Stellung C angeordnete Mittelstellung aus.

Die beiden Halbwellen 2a, 2b weisen am den Abtriebsrädern 4a, 4b zugewandten Ende einen außenverzahnten Abschnitt 20a, 20b auf. Der außenverzahnte Abschnitt 20a der ersten Halbwelle 2a steht permanent - also in allen Schalstellungen A. B, C - mit einem innenverzahnten Bereich 60a der ersten Schiebemuffe 6a im Zahneingriff, wobei die erste Schiebemuffe 6a in Bezug auf die erste Halbwelle 2a verschiebbar ist. Weiters steht der außenverzahnte Abschnitt 20b der zweiten Halbwelle 2b mit einem innenverzahnten Bereich 60b der zweiten Schiebemuffe 6b in der zweiten Schaltstellung B und in der dritten Schaltstellung C im Zahneingriff. Die zweite Schiebemuffe 6b ist in Bezug auf die zweite Halbwelle 2b axial verschiebbar ausgebildet. In der ersten Schalstellung A stehen dagegen der außenverzahnte Abschnitt 20b der zweiten Halbwelle 2b und der innenverzahnte Bereich 60b der zweiten Schiebemuffe 6b nicht im Zahneingriff, sind also voneinander getrennt.

An dem den Halbwellen 2a, 2b abgewandten Ende weisen die erste Schaltmuffe 6a und die zweite Schaltmuffe 6b jeweils einen außenverzahnten Bereich 61a, 61b auf, der mit einer Außenverzahnung 40a, 40b des ersten Abtriebsrades 4a bzw. zweiten Abtriebsrades 4b korrespondiert. Die erste Schiebemuffe 6a ist relativ zum ersten Abtriebsrad 4a und die zweite Schiebemuffe 6b relativ zum zweiten Abtriebsrad 4b verschiebbar. In der ersten Schaltstellung A stehen dabei der außenverzahnte Bereich 61a der ersten Schaltmuffe 6a und die Außenverzahnung 40a des ersten Abtriebsrades 4a nicht im Zahneingriff, sind somit voneinander getrennt. In der zweiten Schaltstellung B und in der dritten Schaltstellung C stehen der außenverzahnte Bereich 61a der ersten Schaltmuffe 6a und die Außenverzahnung 40a des ersten Abtriebsrades im Zahneingriff, sind somit miteinander antriebsverbunden.

Die dritte Schiebemuffe 6c ist mittig und achsgleich zwischen der ersten Schiebemuffe 6c und der zweiten Schiebemuffe 6b angeordnet und weist einen Verbindungselement 62c auf, welcher die erste Schiebemuffe 6a und die zweite Schiebemuffe 6b miteinander verbindet. In axialer Verschieberichtung ist die dritte Schiebemuffe 6c fest - also relativ zur ersten Schaltmuffe 6a und zweiten Schaltmuffe 6b unverschieblich - mit der ersten 6a und der zweiten Schiebemuffe 6b verbunden, so dass alle drei Schiebemuffen 6a, 6b, 6c gemeinsam axial zwischen der ersten Schaltstellung A, der mittigen zweiten Schalt6stellung und der dritten Schaltstellung C verschoben werden können. Die dritte Schaltmuffe 6c ist aber an ihrem ersten Ende 60c ihres Verbindungselement 62c drehbar mit der ersten Schaltmuffe 6a und an ihrem zweiten Ende 61c des Wellenteils 62c drehbar mit der zweiten Schaltmuffe 6b verbunden, so dass die Schaltmuffen 6a, 6b, 6c relativ zueinander um die Drehachse 1a der Antriebsachse 1 verdreht werden können. Die dritte Schaltmuffe 6c weist einen mit dem Verbindungselement 62c drehfest verbundenen außenverzahnten Zahnradteil 63c auf, welcher permanent, also n jeder der drei Schaltstellungen A. B, C mit dem ersten Abtriebsrad 4a im Zahneingriff steht. In der ersten Schaltstellung A und der zweiten Schaltstellung B ist der Zahnradteil 63c vom zweiten Abtriebsrad 4b getrennt, steht in der dritten Schaltstellung C aber mit dem zweiten Abtriebsrad 4b und mit dem ersten Abtriebsrad 4a gleichzeitig im Zahneingriff. In der dritten Schaltstellung C sind somit das erste Abtriebsrad 4a und das zweite Abtriebsrad 4b antriebsmäßig gekoppelt, also drehfest miteinander verbunden.

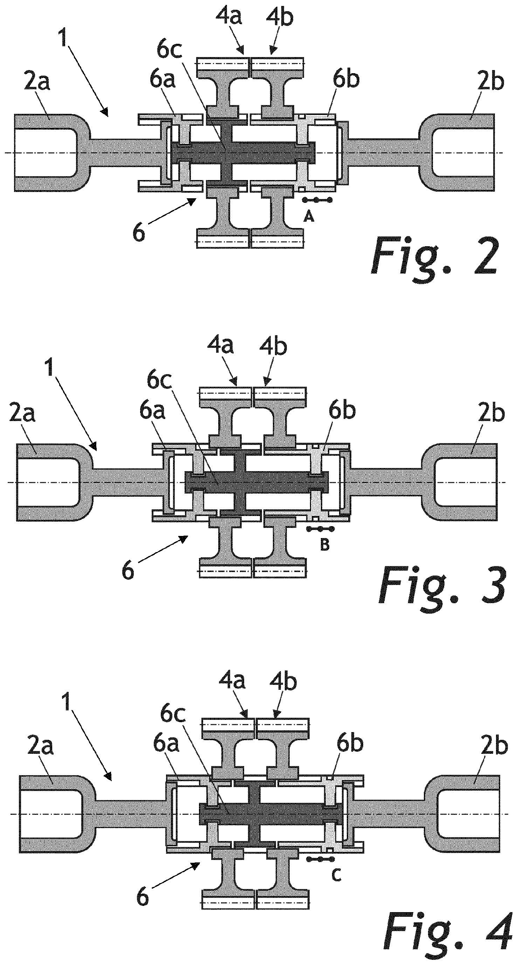

Die Schiebemuffen 6a, 6b, 6c sind so angeordnet und ausgeführt, dass
- in einer ersten Schaltstellung A sowohl die Halbwellen 2a und 2b von den Abtriebsrädern 4a und 4b, als auch die Abtriebsräder 4a und 4b voneinander entkoppelt sind (Fig. 2),
- in einer zweiten Schaltstellung B die erste Halbwelle 2a mit dem ersten Abtriebsrad 4a und die zweite Halbwelle 2b mit dem zweiten Abtriebsrad 4b drehfest verbunden ist, die beiden Abtriebsräder 4a und 4b aber voneinander entkoppelt sind (Fig. 3) und
- in einer dritten Schalstellung 3 sowohl die Halbwellen 2a und 2b mit den Abtriebsrädern 4a und 4b, als auch die beiden Abtriebsräder 4a und 4b miteinander drehfest verbunden sind (Fig. 4).

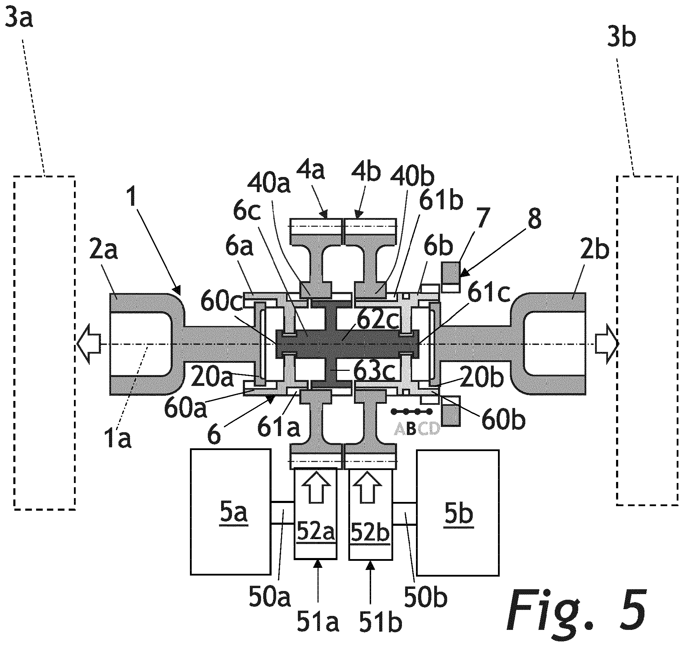

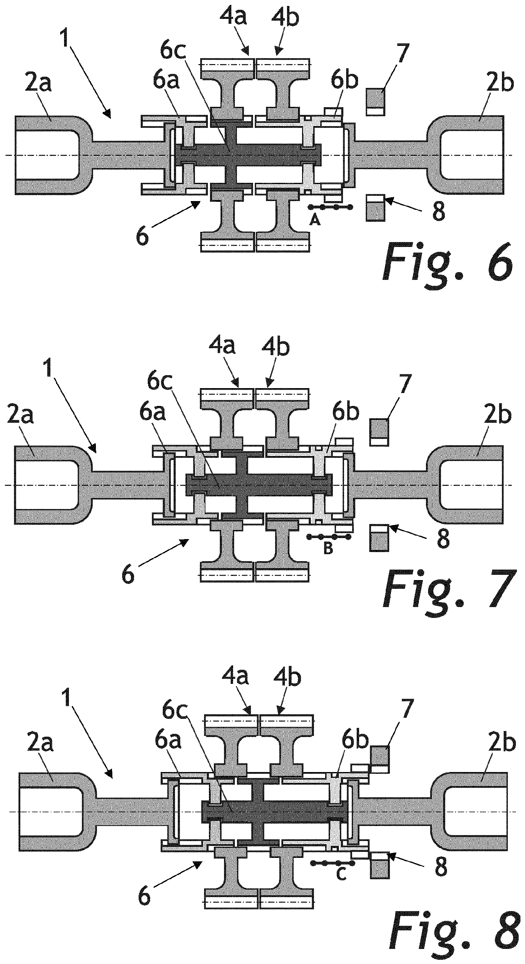

Fig. 5 zeigt eine elektrische Antriebsachse 10 für ein zweispuriges Kraftfahrzeug in einer zweiten Ausführungsvariante der Erfindung. Die Fig. 6 bis Fig. 9 zeigen verschiedene Schaltstellungen A, B, C, D dieser zweiten Ausführungsvariante, wobei die Fig. 6 bis 8 mit den Schaltstellungen A, B, C im Wesentlichen den Fig. 2 bis Fig. 4 entsprechen.

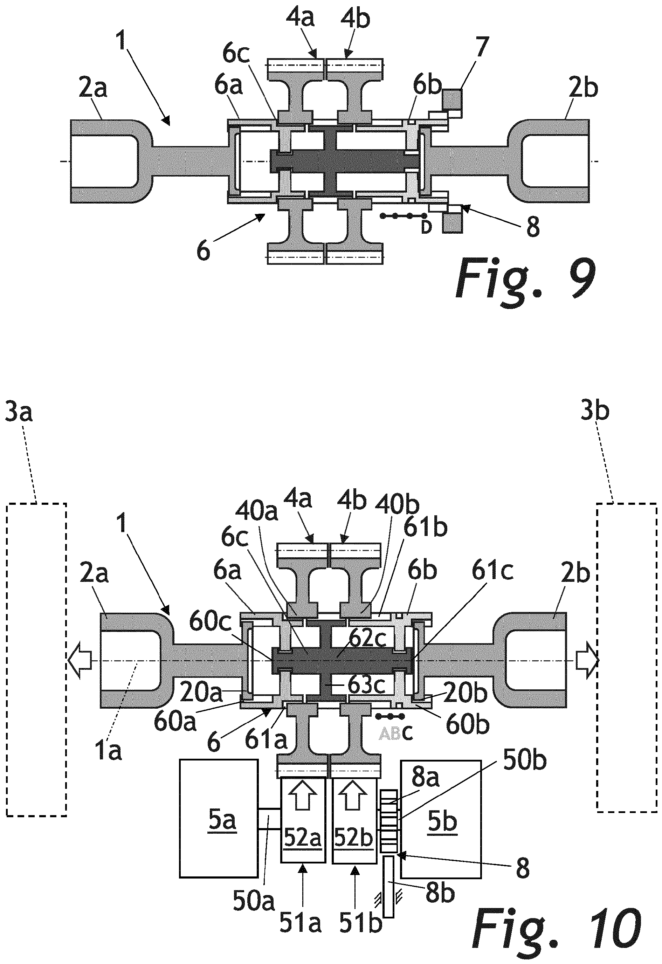

Die zweite Ausführungsvariante unterscheidet sich von der ersten Ausführungsvariante dadurch, dass eine weitere - vierte - Schaltstellung D vorgesehen ist, in der die beiden Halbwellen 2a, 2b drehfest miteinander verbunden sind und zudem die Halbwellen 2a, 2b mit einem Gehäuse 7 verbunden sind, sodass sie sich nicht drehen können (siehe Fig. 9). Die vierte Schaltstellung D bildet somit eine konstruktiv einfache und nur wenige Teile aufweisende Parksperre 8 für die elektrische Antriebsachse 1.

Fig. 10 zeigt eine elektrische Antriebsachse 10 für ein zweispuriges Kraftfahrzeug in einer dritten Ausführungsvariante der Erfindung, bei der ebenfalls eine Parksperre 8 vorgesehen ist. Die Parksperre 8 ist hier durch ein auf der Antriebswelle 50b zwischen der elektrischen Maschine 5b und der Getriebestufe 51 angeordnetes zusätzliches Sperrrad 8a gebildet, in das ein gehäusefest gelagertes und durch einen nicht weiter dargestellten Aktuator betätigtes Sperrglied 8b formschlüssig eingreift und diese Antriebswelle 50b somit gehäusefest fixiert, bei gleichzeitiger drehfester Verbindung der beiden Halbwellen 2a, 2b in der Schaltstellung C. Alternativ kann die Parksperre 8 auch an anderer Stelle im Antriebspfad der ersten elektrischen Maschine 5a oder der zweiten elektrischen Maschine 5b angeordnet sein.

In allen Ausführungsvarianten ist nur ein einziges Schaltelement mit drei miteinander mechanisch -also in axialer Schieberichtung miteinander verbundenen Schiebemuffen 6a, 6b, 6c erforderlich. Die Schiebemuffen 6a, 6b, 6c sind zwar in axialer Schieberichtung miteinander verbunden, allerdings gegeneinander verdrehbar. Insbesondere ist die dritte Schiebemuffe 6c relativ zur ersten Schiebemuffe 6a und zur zweiten Schiebemuffe 6b verdrehbar ausgebildet.

Mit dem Schaltelement 6 können nicht nur die die elektrischen Maschinen 5a, 5b sondern auch die Abtriebsräder 4a, 4b und die Getriebestufen von den Halbwellen 2a, 2b wahlweise entkoppelt oder gekoppelt werden. Diese Funktion ist vor allem in geländegängigen Fahrzeugen sinnvoll, um in schwierigem Gelände oder auf Untergründen mit stark unterschiedlichen Reibkoeffizienten ausreichend Traktion sicher zu stellen.

## Patentansprüche

1. Elektrische Antriebsachse (1) für ein zweispuriges Kraftfahrzeug, mit einer ersten Halbwelle (2a) zum Antrieb eines ersten Rades (3a) und einer zweiten Halbwelle (2b) zum Antrieb eines zweiten Rades (3b) des Kraftfahrzeuges, wobei die erste Halbwelle (2a) über ein erstes Abtriebsrad (4a) durch eine erste elektrische Maschine (5a) und die zweite Halbwelle (2b) über ein zweites Abtriebsrad (4b) durch eine zweite elektrische Maschine (5b) antreibbar ist, wobei zumindest eine elektrische Maschine (5a, 5b) über ein Schaltelement (6) mit einem Rad (3a, 3b) antriebsverbindbar ist, wobei das Schaltelement (6) zumindest eine in einem ersten Antriebspfad zwischen dem ersten Abtriebsrad (4a) und der ersten Halbwelle (2a) koaxial zur ersten Halbwelle (2a) angeordnete und axial verschiebbare erste Schiebemuffe (6a) aufweist, welche ausgebildet ist, um in einer ersten Schaltstellung (A) des Schaltelementes (6) die erste Halbwelle (2a) vom ersten Abtriebsrad (4a) zu trennen und in einer zweiten Schaltstellung (B) und/oder dritten Schaltstellung (C) des Schaltelementes (6) eine drehfeste Verbindung zwischen der ersten Halbwelle (2a) und dem ersten Abtriebsrad (4a) herzustellen, und wobei das Schaltelement (6) zumindest eine in einem zweiten Antriebspfad zwischen dem zweiten Abtriebsrad (4b) und der zweiten Halbwelle (2b) koaxial zur zweiten Halbwelle (2b) angeordnete und axial verschiebbare zweite Schiebemuffe (6b) aufweist, welche ausgebildet ist, um in der ersten Schaltstellung (A) des Schaltelementes (6) die zweite Halbwelle (2b) vom zweiten Abtriebsrad (4b) zu trennen und in der zweiten Schaltstellung (B) und/oder einer dritten Schaltstellung (C) des Schaltelementes (6) eine drehfeste Verbindung zwischen der zweiten Halbwelle (2b) und dem zweiten Abtriebsrad (4b) herzustellen, **dadurch gekennzeichnet, dass** die erste Schiebemuffe (6a) und die zweite Schiebemuffe (6b) über ein Verbindungselement (62c) fest miteinander verbunden sind.

2. Elektrische Antriebsachse (1) nach Anspruch 1, **dadurch gekennzeichnet, dass** das Schaltelement (6) zumindest eine in einem dritten Antriebspfad zwischen dem ersten Abtriebsrad (4a) und dem zweiten Abtriebsrad (4b) koaxial zur ersten Halbwelle (2a) und zweiten Halbwelle (2b) angeordnete und axial verschiebbare dritte Schiebemuffe (6c) aufweist, welche ausgebildet ist, um in der ersten Schaltstellung (A) und/oder zweiten Schaltstellung (B) des Schaltelementes (6) das erste Abtriebsrad (4a) und das zweite Abtriebsrad (4b) antriebsmäßig zu entkoppeln und in einer dritten Schaltstellung (C) des Schaltelementes (6) das erste Abtriebsrad (4a) und das zweite Abtriebsrad (4b) antriebsmäßig miteinander zu koppeln.

3. Elektrische Antriebsachse (1) nach Anspruch 2, **dadurch gekennzeichnet, dass** das Verbindungselement (62c) durch die dritte Schiebemuffe (6c) gebildet ist.

4. Elektrische Antriebsachse (1) nach einem der Ansprüche 1 bis 3, **dadurch gekennzeichnet, dass** das erste Abtriebsrad (4a) und/oder das zweite Abtriebsrad (4b) durch ein Zahnrad einer Getriebestufe gebildet ist.

5. Elektrische Antriebsachse (1) nach einem der Ansprüche 1 bis 4, **dadurch gekennzeichnet, dass** die erste elektrische Maschine (5a) permanent mit dem ersten Abtriebsrad (4a) und/oder die zweite elektrische Maschine (5b) permanent mit dem zweiten Abtriebsrad (4b) antriebsverbunden ist.

6. Elektrische Antriebsachse (1) nach einem der Ansprüche 1 bis 5, **dadurch gekennzeichnet, dass** die Schiebemuffen (6a, 6b, 6c) relativ zu den beiden Halbwellen (2a, 2b) und den beiden Abtriebsrädern (4a, 4b) axial verschiebbar gelagert sind.

7. Elektrische Antriebsachse (1) nach einem der Ansprüche 1 bis 6, **dadurch gekennzeichnet, dass** die erste Schiebemuffe (6a) in jeder der Schaltstellungen (A, B, C) permanent drehfest mit der ersten Halbwelle (2a) und die zweite Schiebemuffe (6b) in jeder der Schaltstellungen (A, B, C) permanent drehfest mit dem zweiten Abtriebsrad (4b) verbunden sind.

8. Elektrische Antriebsachse (1) nach einem der Ansprüche 1 bis 7, **dadurch gekennzeichnet, dass** in der ersten Schaltstellung (A) die erste Schiebemuffe (6a) von dem ersten Abtriebsrad (4a) und die zweite Schiebemuffe (6b) von der zweiten Halbwelle (2b) getrennt sind.

9. Elektrische Antriebsachse (1) nach einem der Ansprüche 1 bis 8, **dadurch gekennzeichnet, dass** in der zweiten (B) und/oder dritten Schaltstellung (C) die erste Schiebemuffe (6a) sowohl mit der ersten Halbwelle (2a), als auch mit dem ersten Abtriebsrad (4a) antriebsverbunden ist und die zweite Schiebemuffe (6b) sowohl mit der zweiten Halbwelle (2b), als auch mit dem zweiten Abtriebsrad (4b) antriebsverbunden ist.

10. Elektrische Antriebsachse (1) nach Anspruch 9, **dadurch gekennzeichnet, dass** in der dritten Schaltstellung (C) das erste Abtriebsrad (4a) und das zweite Abtriebsrad (4b), vorzugsweise durch die dritte Schiebemuffe (6c), miteinander gekoppelt sind.

11. Elektrische Antriebsachse (1) nach Anspruch 10, **dadurch gekennzeichnet, dass** in der dritten Schaltstellung (C) zumindest ein Abtriebsrad (4b) über eine Parksperre (8) blockierbar ist, wobei die Parksperre (8) zumindest ein vorzugsweise auf einer Antriebswelle (50b) einer elektrischen Maschine (5b) angeordnetes Sperrrad (8a) aufweist, in welches ein gehäusefest gelagertes Sperrglied (8b) formschlüssig einlenkbar ist.

12. Elektrische Antriebsachse (1) nach einem der Ansprüche 1 bis 11, **dadurch gekennzeichnet, dass** in einer vierten Schaltstellung (D) die erste Schiebemuffe (6a) sowohl mit der ersten Halbwelle (2a), als auch mit dem ersten Abtriebsrad (4a) antriebsverbunden ist und die zweite Schiebemuffe (6b) sowohl mit der zweiten Halbwelle (2b), als auch mit dem zweiten Abtriebsrad (4b) antriebsverbunden ist, wobei das erste Abtriebsrad (4a) und das zweite Abtriebsrad (4b), vorzugsweise durch die dritte Schiebemuffe (6c), miteinander gekoppelt sind, und dass das erste Schaltelement (6a) und/oder das zweite Schaltelement (6b) drehfest mit einem Gehäuse (7) verbunden sind.

## Claims

1. Electric drive axle (1) for a two-track motor vehicle, having a first half-shaft (2a) for driving a first wheel (3a) and a second half-shaft (2b) for driving a second wheel (3b) of the motor vehicle, wherein the first half-shaft (2a) is drivable via a first output wheel (4a) by a first electric machine (5a) and the second half-shaft (2b) is drivable via a second output wheel (4b) by a second electric machine (5b), wherein at least one electric machine (5a, 5b) can be drive-connected to a wheel (3a, 3b) via a switching element (6), wherein the switching element (6) has at least one first sliding sleeve (6a) which is arranged in a first drive path between the first output wheel (4a) and the first half-shaft (2a) coaxially to the first half-shaft (2a) and is axially displaceable, and which is designed to separate the first half shaft (2a) from the first output wheel (4a) in a first switching position (A) of the switching element (6) and to establish a rotationally fixed connection between the first half shaft (2a) and the first output wheel (4a) in a second switching position (B) and/or third switching position (C) of the switching element (6), and wherein the switching element (6) has at least one second sliding sleeve (6b) which is arranged in a second drive path between the second output wheel (4b) and the second half shaft (2b) coaxially to the second half shaft (2b) and is axially displaceable, and which is designed to separate the second half-shaft (2b) from the second output wheel (4b) in the first switching position (A) of the switching element (6) and to establish a rotationally fixed connection between the second half-shaft (2b) and the second output wheel (4b) in the second switching position (B) and/or a third switching position (C) of the switching element (6), **characterised in that** the first sliding sleeve (6a) and the second sliding sleeve (6b) are firmly connected to one another via a connecting element (62c).

2. Electric drive axle (1) according to claim 1, **characterised in that** the switching element (6) has at least one third sliding sleeve (6c) which is arranged in a third drive path between the first output wheel (4a) and the second output wheel (4b) coaxially to the first half-shaft (2a) and second half-shaft (2b) and is axially displaceable, and which is designed to decouple the first output wheel (4a) and the second output wheel (4b) in terms of drive in the first switching position (A) and/or second switching position (B) of the switching element (6) and to couple the first output wheel (4a) and the second output wheel (4b) to one another in terms of drive in a third switching position (C) of the switching element (6).

3. Electric drive axle (1) according to claim 2, **characterised in that** the connecting element (62c) is formed by the third sliding sleeve (6c).

4. Electric drive axle (1) according to one of claims 1 to 3, **characterised in that** the first output wheel (4a) and/or the second output wheel (4b) is formed by a gearwheel of a gear stage.

5. Electric drive axle (1) according to one of claims 1 to 4, **characterised in that** the first electric machine (5a) is permanently drive-connected to the first output wheel (4a) and/or the second electric machine (5b) is permanently drive-connected to the second output wheel (4b).

6. Electric drive axle (1) according to one of claims 1 to 5, **characterised in that** the sliding sleeves (6a, 6b, 6c) are mounted so as to be axially displaceable relative to the two half shafts (2a, 2b) and the two output wheels (4a, 4b).

7. Electric drive axle (1) according to one of claims 1 to 6, **characterised in that** the first sliding sleeve (6a) is permanently connected in a rotationally fixed manner to the first half shaft (2a) in each of the switching positions (A, B, C) and the second sliding sleeve (6b) is permanently connected in a rotationally fixed manner to the second output wheel (4b) in each of the switching positions (A, B, C).

8. Electric drive axle (1) according to one of claims 1 to 7, **characterised in that** in the first switching position (A) the first sliding sleeve (6a) is separated from the first output wheel (4a) and the second sliding sleeve (6b) is separated from the second half shaft (2b).

9. Electric drive axle (1) according to one of claims 1 to 8, **characterised in that,** in the second (B) and/or third switching position (C), the first sliding sleeve (6a) is drive-connected both to the first half-shaft (2a) and to the first output wheel (4a), and the second sliding sleeve (6b) is drive-connected both to the second half-shaft (2b) and to the second output wheel (4b).

10. Electric drive axle (1) according to claim 9, **characterised in that,** in the third switching position (C), the first output wheel (4a) and the second output wheel (4b) are coupled to one another, preferably by the third sliding sleeve (6c).

11. Electric drive axle (1) according to claim 10, **characterised in that,** in the third switching position (C), at least one output wheel (4b) can be blocked via a parking lock (8), wherein the parking lock (8) has at least one ratchet wheel (8a) which is preferably arranged on a drive shaft (50b) of an electric machine (5b) and into which a ratchet member (8b), which is mounted fixed to the housing, can be positively engaged.

12. Electric drive axle (1) according to one of claims 1 to 11, **characterised in that,** in a fourth switching position (D), the first sliding sleeve (6a) is drive-connected both to the first half shaft (2a) and to the first output wheel (4a), and the second sliding sleeve (6b) is drive-connected both to the second half shaft (2b) and to the second output wheel (4a), as well as to the second output wheel (4b), wherein the first output wheel (4a) and the second output wheel (4b) are coupled to one another, preferably by the third sliding sleeve (6c), and **in that** the first switching element (6a) and/or the second switching element (6b) are connected to a housing (7) in a rotationally fixed manner.

## Revendications

1. Essieu moteur électrique (1) pour un véhicule à deux voies, comprenant un premier demi-arbre (2a) pour entraîner une première roue (3a) et un second demi-arbre (2b) pour entraîner une seconde roue (3b) du véhicule,
- le premier demi-arbre (2a) est entraîné avec une première roue de sortie (4a) par un premier moteur électrique (5a) et le second demi-arbre (2b) est entraîné avec une seconde roue de sortie (4b) par un second moteur électrique (5b),
- au moins un moteur électrique (5a, 5b) peut être relié pour l'entraînement avec une roue (3a, 3b) par un élément de commutation (6),
* l'élément de commutation (6) comporte un premier manchon coulissant (6a) dans un premier chemin d'entraînement entre la première roue de sortie (4a) et le premier demi-arbre (2a), coaxialement par rapport au demi-arbre (2a) et coulissant axialement, ce premier manchon (6a) coulissant étant réalisé pour, dans une première position de commutation (A) de l'élément de commutation (6), séparer le premier demi-arbre (2a) et la première roue de sortie (4a) et dans une seconde position de commutation (B) et/ou une troisième position de commutation (C) de l'élément de commutation (6), réaliser une liaison solidaire en rotation entre le premier demi-arbre (2a) et la première roue de sortie (4a), et
* l'élément de commutation (6) comporte au moins un second manchon coulissant (6b) dans un second chemin d'entraînement entre la seconde roue de sortie (4b) et le second demi-arbre (2b), installé coaxialement au second demi-arbre (2b) et coulissant axialement, ce second manchon (6b) étant réalisé pour, dans une première position de commutation (A) de l'élément de commutation (6), séparer le demi-arbre (2b) et la seconde roue de sortie (4b) et dans la seconde position de commutation (B) et/ou dans une troisième position de commutation (C) de l'élément de commutation (6), réaliser une liaison solidaire en rotation entre le second demi-arbre (2b) et la seconde roue de sortie (4b),
essieu **caractérisé en ce que**
le premier manchon coulissant (6a) et le second manchon coulissant (6b) sont reliés solidairement par un élément de liaison (62c).

2. Essieu moteur électrique (1) selon la revendication 1,
**caractérisé en ce que**
l'élément de commutation (6) comporte au moins un troisième manchon coulissant (6c), dans un troisième chemin d'entraînement entre la première roue de sortie (4a) et la seconde roue de sortie (4b), coulissant axialement par rapport au premier demi-arbre (2a) et au second demi-arbre (2b), ce manchon étant réalisé pour, dans la première position de commutation (A) et/ou la seconde position de commutation (B) de l'élément de commutation (6), découpler en entraînement la première roue de sortie (4a) et la seconde roue de sortie (4b) et dans une troisième position de commutation (C) de l'élément de commutation (6), coupler en entraînement la première roue de sortie (4a) et la seconde roue de sortie (4b).

3. Essieu moteur électrique (1) selon la revendication 2,
**caractérisé en ce que**
l'élément de liaison (62c) est formé par un troisième manchon coulissant (6c).

4. Essieu moteur électrique (1) selon l'une des revendications 1 à 3, **caractérisé en ce que**
la première roue de sortie (4a) et/ou la seconde roue de sortie (4b) sont formées par une roue dentée d'un étage de transmission.

5. Essieu moteur électrique (1) selon l'une des revendications 1 à 4, **caractérisé en ce que**
le premier moteur électrique (5a) est relié pour l'entraînement, en permanence, avec la première roue de sortie (4a) et/ou le second moteur électrique (5b) est relié pour l'entraînement, en permanence, avec la seconde roue de sortie (4b).

6. Essieu moteur électrique (1) selon l'une des revendications 1 à 5, **caractérisé en ce que**
les manchons coulissants (6a, 6b, 6c) sont montés coulissant axialement par rapport aux deux demis-arbres (2a, 2b) et aux deux roues de sortie (4a, 4b).

7. Essieu moteur électrique (1) selon l'une des revendications 1 à 6, **caractérisé en ce que**
le premier manchon coulissant (6a) est relié solidairement en rotation de manière permanente dans chacune des positions de commutation (A, B, C) avec le premier demi-arbre (2a) et le second manchon coulissant (6b) est relié solidairement en rotation de manière permanente avec la seconde roue de sortie (4b) dans chacune des positions de commutation (A, B, C).

8. Essieu moteur électrique (1) selon l'une des revendications 1 à 7, **caractérisé en ce que**
dans la première position de commutation (A), le premier manchon coulissant (6a) est séparé de la première roue de sortie (4a) et le second manchon coulissant (6b) est séparé du second demi-arbre (2b).

9. Essieu moteur électrique (1) selon l'une des revendications 1 à 8, **caractérisé en ce que**
dans la seconde position de commutation (B) et/ou la troisième position de commutation (C), le premier manchon coulissant (6a) est relié pour l'entraînement, à la fois avec le premier demi-arbre (2a) et avec la première roue de sortie (4a) et le second manchon coulissant (6b) est relié pour l'entraînement, à la fois avec le second demi-arbre (2b) et avec la seconde roue de sortie (4b).

10. Essieu moteur électrique (1) selon la revendication 9,
**caractérisé en ce que**
dans la troisième position de commutation (C), la première roue de sortie (4a) et la seconde roue de sortie (4b) sont couplées l'une à l'autre de préférence par le troisième manchon coulissant (06c).

11. Essieu moteur électrique (1) selon la revendication 10,
**caractérisé en ce que**
dans la troisième position de commutation (C), au moins une roue de sortie (4b) peut être bloquée par un blocage de stationnement (8), le blocage de stationnement (8) comportant une roue de blocage (8a) de préférence sur l'arbre d'entraînement (50b) d'un moteur électrique (5b), cette roue pouvant s'engager par une liaison par la forme avec un organe de blocage (8b) monté solidaire du boîtier.

12. Essieu moteur électrique (1) selon l'une des revendications 1 à 11, **caractérisé en ce que**
dans une quatrième position de commutation (D), le premier manchon coulissant (6a) est relié pour l'entraînement à la fois avec le premier demi-arbre (2a) et avec la première roue de sortie (4a) et le second manchon coulissant (6b) est relié pour l'entraînement à la fois avec le demi-arbre (2b) et aussi avec la seconde roue de sortie (4b),
la première roue de sortie (4a) et la seconde roue de sortie (4b) étant couplées l'une à l'autre de préférence par le troisième manchon coulissant (6c), et
le premier élément de commutation (6a) et/ou le second élément de commutation (6b) sont reliés solidairement en rotation avec un boîtier (7).
